# EUROPEAN PATENT SPECIFICATION

(11) **EP 3 453 883 B1**
(45) Date of publication and mention of the grant of the patent: **14.10.2020**
(21) Application number: 17725341.6
(22) Date of filing: 04.05.2017
(51) Int. Cl.: F04D 17/10, F04D 29/58, F04D 29/60, F04D 29/66, F16M 1/00

(54) **CENTRIFUGAL COMPRESSOR**
ZENTRIFUGALVERDICHTER
COMPRESSEUR CENTRIFUGE

(30) Priority: 06.05.2016 CN 201620409148 U
(43) Date of publication of application: 13.03.2019
(73) Proprietor: Atlas Copco Airpower, Naamloze Vennootschap, 2610 Wilrijk (BE)
(72) Inventor: DE KEYSER, Karel, 2610 Wilrijk (BE); SUYKERBUYK, Kristof, 2610 Wilrijk (BE)
(74) Representative: Van Minnebruggen, Ewan Benito Agnes
(86) International application number: PCT/IB2017/000503
(87) International publication number: WO 2017/221056

(56) References cited:
- WO-A1-2010/019426
- US-A1- 2008 112 825
- US-A1- 2012 014 801
- US-A1- 2013 078 118
- US-A1- 2015 207 380

## Description

### TECHNICAL FIELD

The present invention relates to a centrifugal compressor, especially a centrifugal compressor which can avoid resonance.

### BACKGROUND ART

A centrifugal compressor comprises a compressor head, a motor, a cooler, an oil tank, a chassis and other major components. The compressor head and the motor are the drive chain of the centrifugal compressor rigidly connected to the cooler, the oil tank and the chassis, as disclosed in US 2008/0112825 and US 2012/0014801. Only a motor with a fixed power section fits the centrifugal compressor. US 2015/0207380 discloses a mount unit to suppress vibrations of only the motor in only one direction, viz. the horizontal direction orthogonal to the direction of the axis of the motor. During operation of the centrifugal compressor, the natural frequency of the complete machine can hardly avoid the section of 50-60 Hz, so that resonance problem is likely to occur. Moreover, after the occurrence of resonance, the natural frequency of the complete machine can hardly be improved by change of the structure, resulting in inextricability of the resonance problem.

### CONTENT OF THE INVENTION

In order to solve the abovementioned problem, the present invention provides a centrifugal compressor which can avoid resonance during operation thereof.

To realize the above-mentioned object, the centrifugal compressor of the present invention comprises a compressor head, a motor, a cooler, a support frame, a bearing beam and a chassis. The cooler and the support frame are fixedly mounted on the chassis. The bearing beam is disposed above the cooler and the support frame. The support frame supports the bearing beam. The compressor head and the motor are disposed above the bearing beam. The compressor head and the motor are fixedly mounted on the bearing beam.

According to the invention, a first damping pad is provided between the support frame and the bearing beam. The first damping pad is fixedly connected to the support frame and the bearing beam, respectively.

Preferably, a second damping pad is provided between the cooler and the bearing beam. The second damping pad is fixedly connected to the cooler and the bearing beam, respectively.

Preferably, the second damping pad is fixedly connected to the bearing beam by means of a bearing connector. The bearing connector is welded to the bearing beam. The bearing connector is fixedly connected to the second damping pad by means of a bolt.

Preferably, the centrifugal compressor of the present invention also comprises an oil tank fixedly mounted on the chassis.

By adding a bearing beam, a first damping pad and a second damping pad, the centrifugal compressor of the present invention may isolate vibration, prevent vibration of the drive chain from being transmitted onto the chassis, and isolate vibration influence of external vibration on the drive chain at the same time. The centrifugal compressor of the present invention avoids resonance problem and prolongs the service life of the complete machine.

### BRIEF DESCRIPTION OF THE DRAWINGS

Figure 1 is a schematic view of the centrifugal compressor of the present invention;
Figure 2 is a front view of Figure 1;
Figure 3 is a rear view of Figure 1;
Figure 4 is a right view of Figure 1;

### DETAILED DESCRIPTION OF THE EMBODIMENTS

The embodiments of the present invention are described below in detail with reference to the drawings.

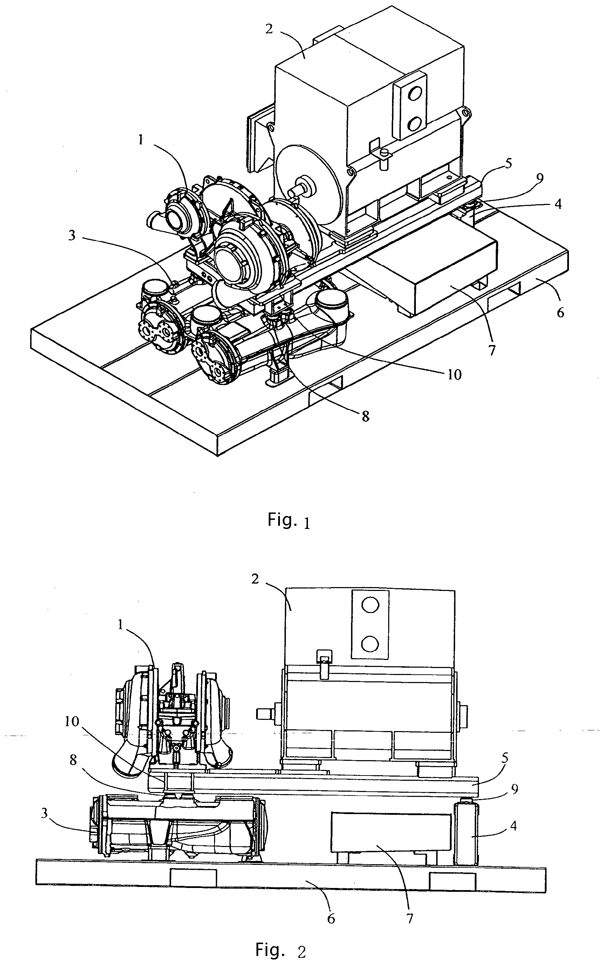

As shown by Figures 1-4, the centrifugal compressor of the present invention comprises a compressor head 1, a motor 2, a cooler 3, a support frame 4, a bearing beam 5 and a chassis 6. The cooler 3 and the support frame 4 are fixedly mounted on the chassis 6. Such fixed mounting may be realized by a bolt. Of course, the support frame 4 may also be fixed on the chassis 6 in a welding manner. The bearing beam 5 is disposed above the cooler 3 and the support frame 4, such that the cooler 3 and the support frame 4 are between the bearing beam 5 and the chassis 6. The bearing beam 5 is supported by the cooler 3 and the support frame 4.

A person skilled in the art can understand that, the bearing beam 5 may also be supported directly by the support frame 4, i.e., the upper portion of the cooler 3 may not be connected with the bearing beam.

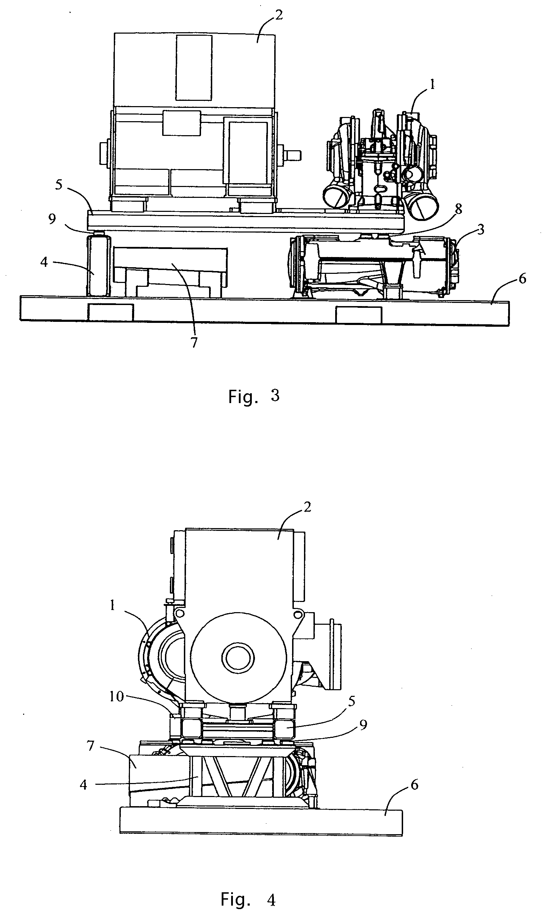

A first damping pad 9 is provided between the support frame 4 and the bearing beam 5. A second damping pad 8 is provided between the cooler 3 and the bearing beam 5. The first damping pad 9 is fixedly connected to the support frame 4 and the bearing beam 5, respectively. The second damping pad 8 is fixedly connected to the cooler 3 and the bearing beam 5, respectively. As shown by Figure 3, the fixed connection may be realized by a bolt.

To facilitate mounting, the second damping pad 8 is preferably fixedly connected to the bearing beam 5 by means of a bearing connector 10, as shown by Figures 1 and 2. The bearing connector 10 is welded to the bearing beam 5 and fixedly connected to the second damping pad 8 by means of a bolt.

The first damping pad 9 and the second damping pad 8 may be pressed out of metal wire having damping characteristics, or may also be made from a non-metallic material having damping characteristics, such as rubber, plastic, polyurethane, etc. The number of the first damping pad 9 and the second damping pad may be decided as required.

The compressor head 1 and the motor 2 are disposed above the bearing beam 5. The compressor head 1 and the motor 2 are fixedly mounted on the bearing beam 5, and the fixed mounting may be realized by a bolt.

By adding a bearing beam 5 and providing a second damping pad 8 and a first damping pad 9 between the cooler 3, the support frame 4 and the bearing beam 5, the centrifugal compressor of the present invention may isolate vibration, prevent vibration of the drive chain (i.e., the compressor head 1 and the motor 2) from being transmitted onto the chassis 6, and isolate vibration influence of external vibration on the drive chain at the same time. Use of the above structure avoids resonance problem and a motor with a broader power section is adapted. Moreover, it is ensured that the natural frequency of the complete machine avoids the section of 50-60 Hz.

The centrifugal compressor of the present invention also comprises an oil tank 7 fixedly mounted on the chassis 6. As introduction of the bearing beam 5 separates the oil tank 7 which is no long used as a bearing member, the design of the oil tank is simplified.

As described above, the exemplary embodiments of the present invention have been described in detail with reference to the drawings. It should be understood that, the present invention is not intended to constitute restrictions to the protection scope thereof with these details. Equivalent or similar modifications may be made to the structures and features of the examples disclosed.

## Claims

1. A centrifugal compressor, which comprises a compressor head (1), a motor (2), a cooler (3), a support frame (4), a bearing beam (5) and a chassis (6);
the cooler (3) and the support frame (4) are fixedly mounted on the chassis (6);
the bearing beam (5) is disposed above the cooler (3) and the support frame (4), the support frame (4) supports the bearing beam (5);
the compressor head (1) and the motor (2) are disposed above the bearing beam (5) and fixedly mounted on the bearing beam (5), **characterized in that**, a first damping pad (9) is provided between the support frame (4) and the bearing beam (5), the first damping pad (9) being fixedly connected to the support frame (4) and the bearing beam (5), respectively.

2. The centrifugal compressor according to claim 1, **characterized in that**, a second damping pad (8) is provided between the cooler (3) and the bearing beam (5), the second damping pad (8) being fixedly connected to the cooler (3) and the bearing beam (5), respectively.

3. The centrifugal compressor according to claim 2, **characterized in that**, the second damping (8) pad is fixedly connected to the bearing beam (5) by means of a bearing connector (10) welded to the bearing beam (5) and fixedly connected to the second damping (8) pad by means of a bolt.

4. The centrifugal compressor according to claim 1, **characterized in that**, there further comprises an oil tank (7) fixedly mounted on the chassis (6).

## Patentansprüche

1. Zentrifugalverdichter, der einen Verdichterkopf (1), einen Motor (2), einen Kühler (3), einen Tragrahmen (4), einen Lagerbalken (5) und ein Chassis (6) umfasst;
der Kühler (3) und der Tragrahmen (4) sind fest auf dem Chassis (6) montiert;
der Lagerbalken (5) ist über dem Kühler (3) und dem Tragrahmen (4) angeordnet, der Tragrahmen (4) trägt den Tragbalken (5);
der Verdichterkopf (1) und der Motor (2) sind oberhalb des Lagerbalkens (5) angeordnet und fest auf dem Lagerbalken (5) montiert, **dadurch gekennzeichnet, dass** ein erstes Dämpfungskissen (9) zwischen dem Tragrahmen (4) und dem Lagerbalken (5) vorgesehen ist, wobei das erste Dämpfungskissen (9) jeweils fest mit dem Tragrahmen (4) und dem Lagerbalken (5) verbunden ist.

2. Zentrifugalverdichter nach Anspruch 1, **dadurch gekennzeichnet, dass** ein zweites Dämpfungskissen (8) zwischen dem Kühler (3) und dem Lagerbalken (5) vorgesehen ist, wobei das zweite Dämpfungskissen (8) jeweils fest mit dem Kühler (3) und dem Lagerbalken (5) verbunden ist.

3. Zentrifugalverdichter nach Anspruch 2, **dadurch gekennzeichnet, dass** das zweite Dämpfungskissen (8) mittels eines Lagerverbinders (10), der an den Lagerbalken (5) geschweißt ist, fest mit dem Lagerbalken (5) verbunden ist und mittels eines Bolzens fest mit dem zweiten Dämpfungskissen (8) verbunden ist.

4. Zentrifugalverdichter nach Anspruch 1, **dadurch gekennzeichnet, dass** er ferner einen Öltank (7) umfasst, der fest auf dem Chassis (6) montiert ist.

## Revendications

1. Compresseur centrifuge, qui comprend une tête de compresseur (1), un moteur (2), un refroidisseur (3), un cadre de support (4), une poutre porteuse (5) et un châssis (6) ;
le refroidisseur (3) et le cadre de support (4) sont montés fixement sur le châssis (6) ;
la poutre porteuse (5) est disposée au-dessus du refroidisseur (3) et du cadre de support (4), le cadre de support (4) supporte la poutre porteuse (5) ;
la tête de compresseur (1) et le moteur (2) sont disposés au-dessus de la poutre porteuse (5) et montés fixement sur la poutre porteuse (5), **caractérisé en ce que,** un premier coussinet d'amortissement (9) est fourni entre le cadre de support (4) et la poutre porteuse (5), le premier coussinet d'amortissement (9) étant relié fixement au cadre de support (4) et à la poutre porteuse (5), respectivement.

2. Compresseur centrifuge selon la revendication 1, **caractérisé en ce que,** un deuxième coussinet d'amortissement (8) est fourni entre le refroidisseur (3) et la poutre porteuse (5), le deuxième coussinet d'amortissement (8) étant relié fixement au refroidisseur (3) et à la poutre porteuse (5), respectivement.

3. Compresseur centrifuge selon la revendication 2, **caractérisé en ce que,** le deuxième coussinet d'amortissement (8) est relié fixement à la poutre porteuse (5) au moyen d'un raccord d'appui (10) soudé à la poutre porteuse (5) et relié fixement au deuxième coussinet d'amortissement (8) au moyen d'un boulon.

4. Compresseur centrifuge selon la revendication 1, **caractérisé en ce que,** il comprend en outre un réservoir d'huile (7) monté fixement sur le châssis (6).
